# EUROPEAN PATENT APPLICATION

(11) **EP 4 243 333 A1**
(43) Date of publication of application: **13.09.2023**
(21) Application number: 22305273.9
(22) Date of filing: 11.03.2022
(51) Int. Cl.: H04L 9/00, G06F 5/06

(54) **ELECTRONIC CIRCUIT AND METHOD FOR SECURING AND DESYNCHRONIZING REGISTER TRANSFERS TO MITIGATE SIDE CHANNEL ATTACKS**

(71) Applicant: Thales Dis France SAS, 92190 Meudon (FR)
(72) Inventor: TEGLIA, Yannick, 13720 Belcodène (FR); DUVAL, Benjamin, 83470 SAINT MAXIMIN (FR); MIGAIROU, Vincent, 13530 TRETS (FR)
(74) Representative: Grevin, Emmanuel

(57) **Abstract**

An electronic device is provided for securing and desynchronizing register transfers as a mitigation strategy to side channel attacks that employ power analysis profiling, whereby leakage information produced as a result of register switching at the bit-level, by way of random delay cell insertions, is decorrelated from actual power consumption. The technical effect of the solution constructively produces overlapping of current power profiles/signatures, maximally spanning across bit value profiles of a register, which when analyzed from a Hamming Weight or Distance model introduces a wider time-spread of resulting current power profiles thereby impeding deep learning of the transistor switching/flipping state behavior, and consequently disrupting efficacy of profile/signature matching/mapping of transistor state changes characteristic of a traditional power analysis side channel attack. Other embodiments are disclosed.

## Description

### TECHNICAL FIELD

The present invention relates to the technical field of cryptography, cryptographic processing attacks, and side channel attack (SCA) mitigations. More particularly, embodiments relate to micro-electronics, circuits and configurations thereof for disrupting side channel attack learning and SCA profiling of deep-learning machines.

Broadly, it relates to a new and developed way to cryptographically protect electronics using cryptographic algorithms and Public Key Infrastructure (PKI) systems for signature/verification, encryption/decryption, key exchange, and key encapsulation, which are sensitive to side-channel attack.

More specifically, it envisages a means of desynchronizing timing of register transfers used in cryptographic processing at the hardware bit-level to protect profiling of secure intense computations.

Advantageously, the invention provides a technical mechanism for protecting hardware against power analysis profiling by supervised attacks such as deep-learning side-channel attacks.

### BACKGROUND

Cyber-attacks are unwelcome attempts to steal, expose, alter, disable or destroy information through unauthorized access to computer systems. Cyberattacks are now a common and repeating occurrence. One of these attacks is the Side Channel Attack (SCA), which monitors security critical operations and exploits physical leakages from a cryptographic device rather than the weakness in the cryptographic algorithm itself. It exploits system behaviors in an attempt to extract secrets from a semiconductor chip or electronics by measuring or analyzing various physical parameters, for example, timing information, power consumption, heat, acoustics and electromagnetic leaks. Side-channel leakages from a physical electronic device can be exploited to recover a secret such as keys used in encryption mechanisms, or digital signatures, from block and stream ciphers, to public key algorithms post-quantum cryptography. Today, side-channel attacks are considered as the most practical attacks, and countering them is currently considered mandatory for implementing physically secure cryptographic algorithms.

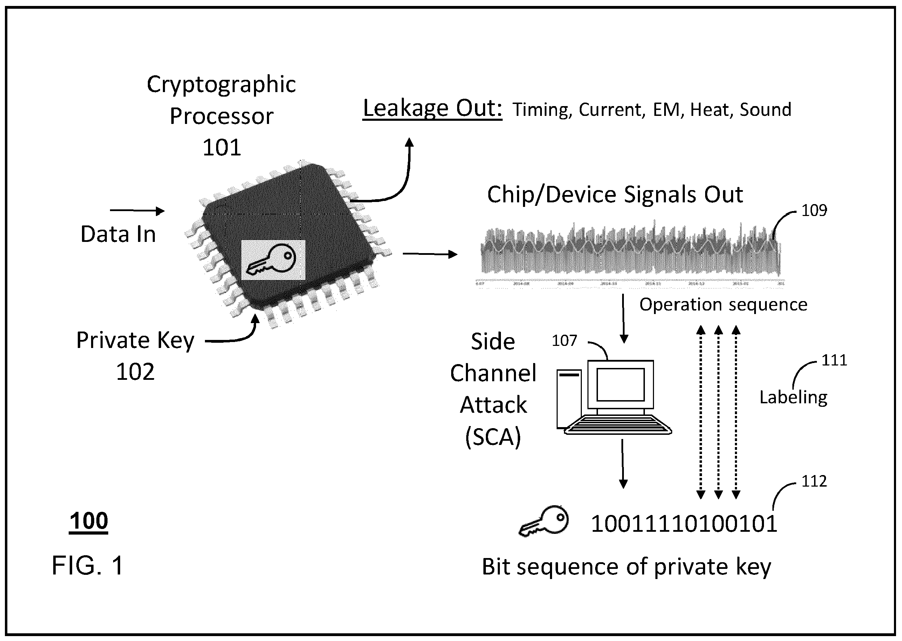

**FIG. 1** depicts an exemplary illustration of a deep-learning system **100** used for side channel attack (SCA) against a cryptographic processor **101**. As shown, the processor **101** receives in data or messages that are cryptographically processed, and in some form or another, rely on a secret, such as, a private key **102**. As shown, at the bit-level, the private key, or other secret, is a bit sequence of ones (1) and zeros (0); see **112**. A side-channel attack (SCA) is a security exploit that attempts to extract a secret such as the private key **102** through analysis of leaked information (e.g. operation sequence **109**) by the cryptographic processor **101**. This can be achieved, for example, by deep learning (by way of an algorithm on machine **107**), through measurement and analysis on various physical parameters, such as, timing, current, electromagnetic emissions, heat, or sound emanating from the cryptographic processor **102**. These types of attacks pose a serious threat to modules that integrate cryptographic systems. Although many side-channel analysis techniques have proven successful in breaking an algorithmically robust cryptographic operation and extracting the secret key, deep learning systems pose new abilities and concerns.

A deep learning side-channel attack (DL-SCA) is a new form of a profiling side-channel attack method that uses a machine-intelligence system's statistical learning abilities to reveal a cryptographic module's secret key **102** from such side-channel information. A deep learning algorithm (executing on machine **107**) can learn a mapping between leaked information and the individual bits of the private key, in what is called "labeling" **111**. As an example of a DL-SCA, a neural network can be trained from the output of power and timing signals captured from a target cryptographic module, or cryptographic processor **101**. The trained neural network extracts relevant hardware processing information (e.g. transistor state changes, gate switching, logic operations, etc.) and external information (e.g. electrical signals, EM signals/waveforms, etc.) from the leaky part that depends on the private key **102**.

DL-SCA's can also exploit algorithm specific implementation details (whether in software, hardware, or combination thereof) to gain knowledge about the private key **102**, such as the time the algorithm (at the high-level software operating-system level, or the low-level gate logic) takes to execute the computation. For instance, the time duration taken by the known square-and-multiply algorithm used in classical implementation of the modular exponentiation depends linearly on the number of bits in the key. This linear relation can be exploited by an attacker, to infer the number of bits in the key by timing how long it takes to perform the computation for diverse RSA keys. That is, it can link an operation sequence of machine instructions, for instance, add and multiply operations of an SCA algorithm, to bits in the private key **102** during its access and use by the cryptographic processor **101**, to label operations sequences to bit values of the private key, thereby compromising the security of the system.

Simple power analysis is a method of side-channel attack that examines a chip's current consumption over time. Because different electronic computation operations will exhibit different power profiles during security relevant tasks, an attacker can determine what type of operation is being performed at a given time. As each operation has its individual power signature, it is possible to determine which operations are performed within the chip by solely looking at its power consumption between clock cycles. Moreover, the power trace of the execution of the same operation looks slightly different if the data supplied to that operation is different as well because more internal states need to be switched and this involves higher power consumption, which can be analyzed over time. For systems which are not especially hardened against these kinds of attacks, an attacker might thus be able to determine which operations are performed within a microchip by solely looking at the power traces.

### SUMMARY

Herein provided is an electronic device for securing and desynchronizing register transfers as a mitigation strategy to side channel attacks that employ power analysis profiling, whereby leakage information produced as a result of register switching at the bit-level, by way of random delay cell insertions, is decorrelated from actual power consumption. The technical effect of the solution provided by way of the electronic device constructively produces overlaps of current power profiles/signatures, maximally spanning across bit value profiles of a register (or across data paths of sequential logic elements), which when analyzed from a Hamming Weight or Distance model introduces a wider time-spread of resulting current power profiles thereby impeding deep learning of the transistor switching/flipping state behavior, and consequently disrupting efficacy of profile/signature matching/mapping of transistor state changes characteristic of a traditional power analysis side channel attack.

In another embodiment, an electronic circuit configuration incorporates programmable random delay cells to desynchronize transitions across sequential circuit elements (e.g. transistors, CMOS gates, flip-flops, sequential elements, etc.) representing the bit-level values, for example, a register used in a cryptographic operation. The programmable random delay cells receive as input a random state to introduce randomness in the transistor state changes, yet are constricted to a predetermined time/delay period, such that the representation of the state (e.g. 0 or 1) is maximally stretched or compressed within a permitted state boundary. The random state can be provided by way of a random masking bit, random number generator (RNG), a random selector or combination thereof. The predetermined time/delay period that defines the permitted state boundary can itself be programmed, or learned, from analysis of multiple power consumption waveforms for same operation sequences when executed several times.

In yet another embodiment, a method for decorrelating information leaked by an electronic device from its power consumption is provided. The method includes securing and desynchronizing register transfers by way of a realized circuit design (e.g. VHDL/Verilog for FPGA, RTL for IC/SoC design, etc.) and/or method of manufacture thereof, to incorporate programable delay cells and bit-level randomizations that desynchronize transitions among sequential circuit elements (e.g. transistors, CMOS gates, flip-flops, etc.) representing bit-level values is provided, for example, a register design used for cryptographic operation. The method includes adding a programmable delay cell between a start point and an end point of a data path traversing combinational logic. The programmable delay can be sourced via a random state element, such as a random masking bit, a random selector or combination thereof. In one arrangement, the programmable delay cell is inserted along a gated clock path (synchronous) data path where the start point and end point are clocked. In another arrangement, the programmable delay cell is inserted at along a non-gated clock path (asynchronous), for example, from an input port to a set/clear pin of a sequential element.

In another embodiment a temporaly-skewed latch is provided. By way of random level triggering (e.g. a random masking bit, a random selector or combination thereof), the latch injects randomness on the bus lines between sequential logic circuits (spanning combinational logic) by adding information coming from a random number generator (RNG). The randomness maximizes a current (electromagnetic) waveform spread of each bit-flip such that the representation of each bit value overlaps as many neighboring bit values (e.g., waveform tails and heads of adjacent current envelopes/signals) as permitted between sequential circuits to fully diversify a signature profile for a same value of the bit. That is, the spread of each flip is such that each bit overlaps as many neighborhoods as possible to have many different signatures for the same value. This spreading of the bit-value waveforms from the viewpoint of a current profile analysis renders any labeling or linking activity of power consumption activity to bit value less effective.

Advantageously, these embodiments complement the traditional/regular protection measures (scrambling, hiding, masking, etc.) on sequential logic registers to mitigate/cancel correlations between the data and the power consumption. The addition of a random programmable delay ensures current profiles/signatures targeted by power analysis are varied and different when an operation is executed several times, which further conceals power leakage on the combinational logic thereby reducing the strength of a power analysis profiling by a side channel attack. The inventive design can be used to mitigate a supervised attack because it further granulizes the modeling of a whole register to the bit thereby decreasing and thwarting the possibility of supervised attacks.

### BRIEF DESCRIPTION OF THE DRAWINGS

The features of the present invention, which are believed to be novel, are set forth with particularity in the appended claims. The invention, together with further objects and advantages thereof, may best be understood by reference to the following description, taken in conjunction with the accompanying drawings, in the several figures of which like reference numerals identify like elements, and in which:
**FIG. 1** depicts an exemplary illustration of a deep-learning system **100** used for side channel attack (SCA) against a cryptographic processor;
**FIG. 2A** depicts a generic schematic of a register **200**, for example, as would be found in the cryptographic processor of **FIG 1**;
**FIG. 2B** illustrates a set of power traces corresponding to different hamming weights and values;
**FIG 3** depicts a high-level diagram of a circuit **300** for visualizing data paths, timing analysis and resulting current signature profiles;
**FIG 4A** depicts a high-level diagram of a circuit **400** configuration that incorporates a random programmable delay line **401** in accordance with an embodiment;
**FIG 4B** depicts an exemplarly schematic **450** that includes the random delay cell **420** seen in circuit **400** of **FIG 4A** in accordance with an embodiment;
**FIG 5** depicts a shift register with flip-flops incoporating a random delay cell in accordance with an inventive embodiment;
**FIG. 6** depicts a temporally skewed latch **600** incorporating a random delay cell in accordance with anther embodiment; and
**FIG. 7** depicts an exemplary diagrammatic representation of a machine suitable for use to perform the methods in accordance with an embodiment.

### DETAILED DESCRIPTION

While the specification concludes with claims defining the features of the invention that are regarded as novel, it is believed that the invention will be better understood from a consideration of the following description in conjunction with the drawing figures.

### The Problem

Over the years, research on Side Channel Attacks has confirmed that power leakage is equivalent to an information leakage, and thereby allows an attacker to recover secret data of electronics devices by monitoring the power consumption, and/or the resulting leakage consequent to power consumption activities (e.g., EM, heat, photonic emission, etc.).
Because side-channel attacks rely on the relationship between information emitted (leaked) through a side channel and the secret data, countermeasures generally fall into two main categories: a) eliminate or reduce the release of such information, and b) eliminate the relationship between the leaked information and the secret data, that is, make the leaked information unrelated, or rather uncorrelated, to the secret data, typically through some form of
randomization of the internal variables that transforms the data in a way that can be undone after the cryptographic operation is completed. The use of random delays in embedded software has been proposed as a generic countermeasure against side channel analysis, such as simple power analysis and statistical analysis of the power consumption or electromagnetic emanations. And, hardware based random process interrupts have been considered as candidates for adding clock cycles into a "process" at random points to create desynchronization. In most of these state of the art cases however, this is accomplished at a macro-level, for example, by adding clock jitter, or random controls above the machine word level, or at random points in hardware.

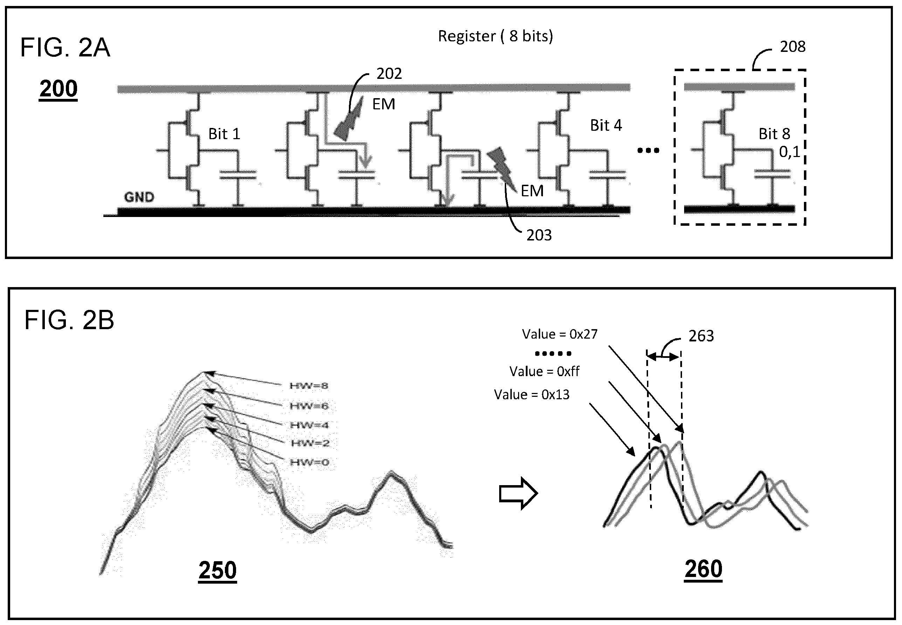

**FIG. 2A** depicts a generic schematic of a register **200**, for example, as would be found in an electronic chip (e.g. cryptographic processor **101** in **FIG 1**). The main point of **FIG 2A** is to briefly illustrate that each transistor is an electronic device, and as such, emits electromagnetic (EM) radiation, which is leaked, and can be detected, when the transistors change states (e.g. 0 to 1 or vice versa). For example, the upper CMOS gate involved in representing bit 2 state can emanate electromagnetic radiation (EM; **202**) during its state change from 0 to 1. Similarly, the lower CMOS gate involved in representing bit 3 state can emanate electromagnetic radiation (EM; **203**) during its state change from 1 to 0.

Briefly, a register is a fast accessible memory available to a CPU. A register may hold an instruction, a storage address, or any kind of data (such as a bit sequence or individual characters). Some instructions specify registers as part of the instruction. For instance, an instruction may specify that the contents of two defined registers be added together and then placed in a specified register. A processor typically contains multiple index registers, also known as address registers or registers of modification. The effective address of any entity in a computer includes the base, index, and relative addresses, all of which are stored in the index register. A shift register is another type. Bits enter the shift register at one end and emerge from the other end. Flip flops, also known as bistable gates, store and process the data.

Here, the register **200** includes elements that each represent an electronic state. A register is made of several gates, each of them storing an atomic information 0 or 1. A CMOS gate is made of two transistors at minimum. More complex gates with dozens of transistors are also contemplated and applicable. As one example, the CMOS gate (**208**) may be in a 0 (low) or 1 (high) state. Complementary metal-oxide-semiconductor, is a type of metal-oxide-semiconductor field-effect transistor (MOSFET) fabrication process that uses complementary and symmetrical pairs of p-type and n-type MOSFETs for logic functions. CMOS technology is used for constructing integrated circuit (IC) chips, including microprocessors, microcontrollers, memory chips (including CMOS BIOS), and other digital logic circuits. Although the wire connections between the gates induce a parasitic capacitance, CMOS has high noise immunity and uses little power, except when it is switching.

Electronic computers (microcontrollers, microprocessors, FPGAs, etc.) have two components to their power consumption: static and dynamic. The static power consumption is the power required to keep the device running, and depends on things like the number of transistors inside the device. Secondly, and more importantly for side channel attack mitigation analysis, dynamic power consumption depends on the data moving around inside the device. Every time a bit is changed from a 0 to a 1 (like those in register **200**), or vice versa, some electronic current is required to charge or discharge the data lines. This dynamic power is the point of exposure interest in simple power analysis of side channel attacks. Transistor power consumption is asymmetric in the sense that when the transistor state changes, the stream of electrons yield a dynamic power consumption, while otherwise only static power consumption occurs. Thus, when one of the CMOS gates in register **200** switches from one state to another (e.g. 0 or 1), it does not consume the same amount of power as when is does not switch. Accordingly, the dynamic power consumption can be perceived as having a wider power consumption variance that the static power consumption. And further it doesn't consume the same amount of power when is switches from one state to another. Accordingly, the Electro Magnetic (EM) field shown by **202** and **203**, evolves as a function of voltage variation.

When the register **200** is loaded with a value v (e.g., bits 0 to 7: 10010001), the induced power consumption is dependent on the static and dynamic states of the transistors representing the value. Usually the induced power consumption is assumed to be linked to the Hamming Weight of v (i.e. the number of bits equal to '1' in the binary representation of v). Hence we can write power(v)=HW(v)+N where the noise is assumed to some electronics perturbations induced by surrounding elements. N is usually assumed to be Gaussian.

Referring to **FIG. 2B**, a set of power traces corresponding to different hamming weights and values is shown. As seen in **250**, the higher levels of power consumption correspond to higher hamming values (e.g. uppermost current profile is HW=8, lowest current provide is HW= 0). Briefly, graphs **260** show a lag **263** that is perceivable as a result of transistor switching and propagation delays. The Hamming Distance model is an extension of the Hamming weight model and uses changes in logic values in a certain time period to asses power consumption. The logic value changes may occur in various other circuit components besides the register shown, for example, as a data/address bus, memory or transistor arrangement. The Hamming Weight model allows an attacker to approximate power consumption of the circuit under evaluation as being proportional to the number of 0 to 1 and 1 to 0 transitions therein. The number of bit transitions (Hamming Weight) is the result of the XOR (exclusive "or") operation of the two values. Theoretically, this allows only the recovery of the Hamming weight of the data, yet the data is composed of multiple bits.

Other leakages model exist where the most information known about the state of the transistor changes is the Hamming Distance (i.e. the number of bits that have switched between the latest value of the register and the current one). Hence we write power(v)ₙ=HD_{n-1->n}(v)+N which means that the power of v depends on the distance between the value of the register at state n-1 and the value of the register at state n. N remains the same as the previous Gaussian noise. The Hamming distance model provides a convenient method for determining the expected power consumption of a circuit over a given time interval. Where a change in data is observable, the hamming Distance is preferred over the Hamming Weight model.

### Specific Problem to Solve

In the register **200** model of **FIG 2A**, there are 8-bits, hence it is an 8-bit register. A collection of 2 bits has 4 possible states (00, 01, 10, and 11). A collection of 3 bits has 8 possible states (000, 001, 010, 011, 100, 101, 110, and 111), and so on. In general, a collection of *n* bits has 2*ⁿ* states. For example, a byte contains eight bits, and is built by grouping eight binary bits into one object; namely, the register **200**. The more bits, the more switching, and the more the leaking, and, hence more susceptibility to power analysis attack. Theoretically for a register having n bits to store a value v, there will be 2ⁿ possible configurations. But this will only map to n+1 different Hamming Weights. Hence, as 2ⁿ >> n+1, several values will then have the same Hamming Weight (HW) and then yield the same power consumption, making their recovery using Side Channel Attack very peculiar/specific due to these collisions; that is, the profiles can be uniquely associated with the bit values. But, in practice, the bits of the registers actually do not flip exactly at the same time, due to variations in misbalancing the design or even in the process. One may even say that they flip sequentially, even if the timing distance between bits is not constant, due to noise. This yield to have 2ⁿ effective power signatures in front of the 2ⁿ values.

On this point, Template Attacks are a special type of side channel attack that exploit knowledge of this flipping behavior at the transistor level by building a dictionary of power signatures in an identification step (that is, a learning step or templating step) and by further confronting a power signature candidate to this dictionary to recover the corresponding value, which occurs in a matching step (also known as an exploitation step or recovery step). One contemplated means for mitigating template attacks would is to force the bits to flip at the exact same moment. However, from a semiconductor design standpoint, this is a huge constraint that demands significant increases in silicon area and/or high resolution clocking rates (frequencies), and/or power consumption increase and likely a complex and costly balancing between all these factors.

Thus there is a need to obfuscate a template attack's ability, as well as other power analysis based side channel attack approaches, that attempt to link power consumption (and observable behaviors related to processor instruction executions and resulting current profiles/signatures) with transistor state change behaviors and render such side channel attack strategies less effective.

### Inventive Details

In one embodiment, an electronic device is provided to mitigate power analysis profiling of a side channel attack. The device comprises a first sequential circuit, a second sequential circuit, a combinational logic between said first and second sequential circuits, and a clock. The sequential circuits are clocked along a data path whereby said electronic device produces power traces with a time delay specific to said electronic device. A random programmable delay line inserted along said data path from said first sequential circuit to said combinational logic desynchronizes transitions within said first and second sequential circuit.The delay line, constructively produces overlaps of said power traces to maximally span bit value profiles of said first and second sequential circuit.

Advantageously, the delay line (401) produces a more numerous and wider time-spread of resulting power trace profiles than without said delay line, thereby impeding deep learning (107) of transistor switching and flipping state behavior when said power traces are analyzed using a Hamming (250,260) Weight or Distance model. Advantageously, the randomizations provided by the random programmable delay line (401) selectively and dynamically modify bus lines of said data path (307), thereby spreading a timing race of each bus line. Advantageously, each random delay cell (420) can be selectively turned off or on for performance tuning at the macro-level; and each individual cell in said series of delay cells (425) can be selectively turned off or on for performance tuning at the micro-level.

It aims at protecting register transfers and can be used not only for cryptographic purposes before operational execution of commands on a processor, but also during those operations. It serves to obfuscate detection of exchanges between low-level device, for example, from memory or register to another register, including keys that will further be used in cryptographic algorithms, including, but not limited to Public Key Infrastructure activities, such as asymmetric (e.g. ECC and RSA) or symmetric key (e.g. AES). For instance, the inventive approach/method can be incorporated in a smart card or a secure element implementing RSA signature/verification using modular exponential algorithms and ECC signature/verification using point addition algorithms to protect profiling of the highly intense math operations (e.g., point multiplication, point addition, etc.).

Briefly, the term bit "flipping" means the state of changing a bit value from a binary 0 to 1 or vice versa. The term bit "switching" means the temporal manner by which a transistor charges or discharges in changing from one state to another. The term "state", when referring to a transistor, can mean either on or off, or, 0 or 1.

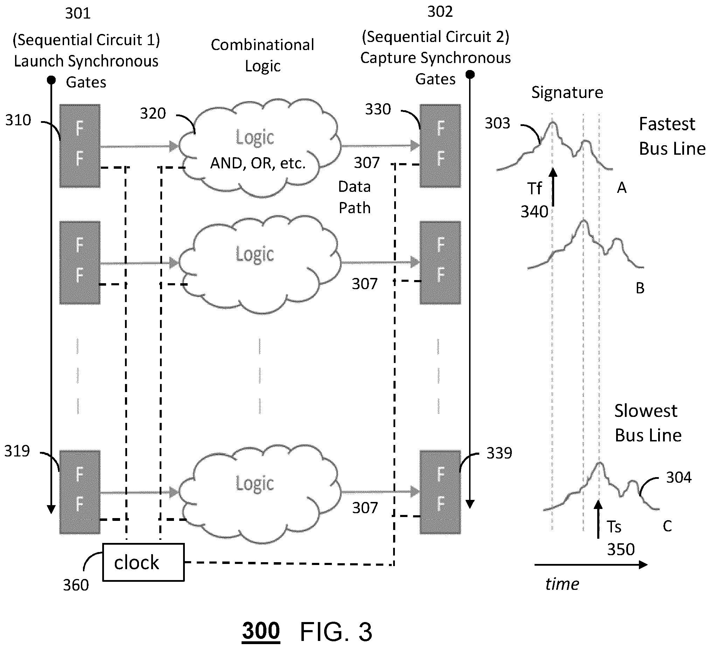

**FIG** 3 depicts a high-level diagram of a circuit **300** for visualizing data paths, timing analysis and resulting current (electromagnetic) signature profiles. It is a type of logic circuit whose output depends not only on the present value of its input signals but on the sequence of past inputs. Sequential logic (such as the launch synchronous gates and the capture synchronous gates) has state (memory) while the combinational logic **320** does not. Nearly all sequential logic today is clocked or synchronous logic. Circuit **300** is based on combinational logic circuit elements (AND, OR, etc.) working alongside sequential circuit elements (latches and flip-flops grouped together to form registers). In the synchronous design of circuit **300**, logic buses are composed of three main blocks: the launch synchronous gates latch the data on system clock edge, the combinational logic circuits perform boolean algebra, and the capture synchronous gates store the result on next system clock cycle.

In this illustration, logic paths flow can be visualized from left to right, and up to down; namely, starting from the launch points (310-319), across the combinational logic, and ending at the capture points (330-339). Down the column of launch synchronous gates are a series of sequential circuits (here, flip-flops: FF **310**). Down the column of capture synchronous gates are also a series of sequential circuits (here, flip-flops: FF **330**). Between the two columns is the combinational logic **320**, whose output is a function of only the present input. Along each data path, between the respective launch (start) 310 and capture (end) 330 points, sits logic **320** (e.g. AND, OR, etc.). The logic **320** is individually specific to the data path, and its synchronous gates before (e.g. 310) and after (e.g. 330). All the sequential circuits are synchronized by way of a clock **360**; the circuit changes from the present state to the next state on the clock control input. The combinational logic **320** does not use memory and does not use the clock. The change of its internal state occurs when there is a change in the input variable. Combinational logic is characterized by its propagation delay and contamination delay. The propagation delay is the maximum time from when any input changes until the output or outputs reach their final value. The contamination delay is the minimum time from when any input changes until any output starts to change its value.

The flip flop (**310** or **330**) is a sequential circuit which samples its inputs and changes its outputs only at particular instants of time and not continuously. A flip-flop is used to store a single binary bit and has two states; one of its two states represents "1", the other represents "0". A flip flop is said to be edge sensitive or edge triggered rather than being level triggered like latches. The flip-flop is however considered "latched" when the Q terminal output holds the last input condition. Flip-flops are characterized by their propagation delay time. For flip-flops, data must arrive before the rising edge of the clock phase, rather than the falling edge. Data always departs the flop at the rising edge. One must therefore separately track arrival and departure times and introduce a set of departure constraints that relate arrival and departure times.

Briefly, a register is a group of flip-flops used to store a binary word, where one flip-flop is needed for each bit in the data word Accordingly, the group of launch synchronous gates can also represent the bits of a first register (e.g. 200 of FIG 2A), and the group of the capture synchronous gates can represent the bits of a second register, with the combinational logic 320 in between. On a clock cycle, the output (word) of the first register is sent through the combinational logic and reaches the second register. In this case, the diagram **300** represents "register transfer logic". That is, the column of flip-flops on the left represents the register **200**, and corresponding bits, shown in **FIG 2A**, when turned vertical. Whenever circuit **300** receives the clock signal, the output of the register (represented by gates 310-319) is sent through combinational logic **320** and finally reaches the next register (represented by gates 330-339).

During this register transfer/transition time, the transistors in between switch so that single signals or a whole bus get switched from one state into the other. The switching and the capacitances of the various structures within the chip takes time and draws current as a result. If the power consumption is measured over time, for a given data path with same inputs, a unique power trace will results. Understandable, the resulting power trace along each path will be different because it is characteristic to each logic block **320**. Although power trace waveforms A, B, C in FIG 3 appear the same, this is assuming the same logic in between. However, when different combinational logic (more or less elements: XOR, AND, etc.) is separately employed along each data path, the power traces A, B and C will be different in shape and timing from one another.

As noted in the background, there are two types of timing analysis: static and dynamic. Static timing analysis is the approach for validating performance of a design by checking all possible paths for timing violations under worst case conditions. It considers the worst possible delay through each logic element, but not the logical operation of the circuit. Delays such as gate delay and net delays are considered in each path and these delays are compared against their required maximum and minimum values. In contrast, dynamic timing analysis verifies functionality of the design by applying input vectors and checking for correct output vectors whereas Static Timing Analysis checks static delay requirements of the circuit without any input or output vectors. Dynamic timing analysis can be used for synchronous as well as asynchronous designs and is preferable for designs having clocks crossing multiple domains.

Data travel is visualized for our timing analysis purposes here as flowing sequentially from left to right across a row. As can be seen (e.g. Tf **340**, Ts **350)**, the transient current activity timing is unique and stable for a given logic path. Transient means when the transistors in the circuits are changing states (e.g. flipping bits). For instance, along the upper-most row, the fastest bus line with a capture time, Tf **340**, is observed. Along the lower-most row, the slowest bus line with a capture time, Ts **350**, is observed. Allow this appears in the illustration to result from propogation delays associated with the circuitry, the fastest and slowest times can differ from that shown according to the internal delay of the combinational logic 320 ; that is, the fastest bus line may be the lower one, and the slowest bus line could be along the data path in the middle of the diagram.

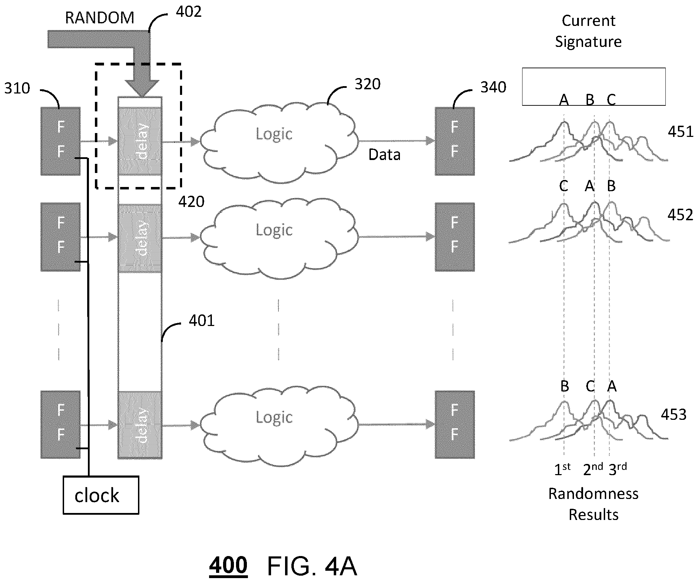

The current activity profile of each bus line is depending on multiple factors such as clock skew, logic Boolean equation, power supply variation. And, all those factors are stable over time. As a consequence, a unique current profile exists for a given vector v. That is a key point for the learning step. In order to make the learning phase more complex, and make a side channel attack based on power analysis less effective, as will be seen ahead in **FIG 4A**, the bus lines current profiles are modified dynamically; namely, an additional circuit is added in each bus line to spread the timing race of each bus line. This additional circuit is a programmable delay that is depending on random value coming from a number generator. The min and max values of the programmable delays are chosen to guarantee that the bus lines current activity overlap when the bus is computing the same vector v many times. Then, the current profile of a given vector v is not unique anymore.

**FIG 4A** depicts a high-level diagram of a circuit **400** configuration that incorporates a random programmable delay line **401** in accordance with an inventive embodiment. This configuration is designed to desynchronize transitions across sequential circuits (e.g. **310** and **340** comprising transistors, CMOS gates, flip-flops, sequential elements, etc.) that realize (manifest) data paths. Here "data" means electrical signals classified as either 0 or 1, through "data" signals can also mean the waveforms used to represent data before it is classified (thresholded) as a 0 or 1. In the case where circuit **400** represents "register transfer logic" the desynchronizing of transitions by way of random delay cells **420** within the random programmable delay line **401** occurs at the bit-level.

The circuit **400** (whether configured as specialized register transfer logic, or, configured as general sequential transfer logic) has setup and hold time constraints that dictate the maximum and minimum delays of the combinational logic **320** due to the flip-flops **310** on the left side comprising the launch synchronous gates, and the flip-fops **330** on the right side comprising the capture synchronous gates; namely, endpoints of the sequential logic circuit. Within these time constraints, in accordance with the inventive aspects herein, the circuit **400** is re-configured/re-designed from that of circuit **300** to maximize neighboring overlaps of the bus lines relevant to the data paths; for instance, the data signals of the fastest bus line, (see Tf **340** in FIG 3), and data signals of the slowest bus line, (see Ts **350** in FIG 3). By way of injecting an individual random delay cell **420** along a data path (bounded between a launch synchronous gate and a launch synchronous gate) along multiple levels (here, rows of each data path), the random programmable delay line **401** within circuit **400**, intentionally induces propagation delays to maximally spread the overlap of power waveforms (induced and/or actual) associated with each data path.

In the illustration of **FIG 4A**, a random delay cell **420** is introduced along sensitive paths, for example, as seen inserted after the launch synchronous capture gate **310** and before the combinational logic **320**. At such location, advantageously, it perturbs the timeliness of the transmission/transfer of the output flip-flop state, within a bounded time constraint so as to ensure the logic states (e.g. 0, 1) during clocking are unchanged, thereby effectively spreading the waveforms between the minimal and the maximum time periods permitted, while ensuring that the data interpretation/representation is unaffected (zeros remain zeros, ones remain ones) at the next clock cycle. The inclusion of randomness **402** into the programmable delay cells **401** is an intentional design choice to desynchronize the transitions of sequential elements in circuit **400** (and also register **200** in a different embodiment) to within a permitted temporal boundary (fastest bus line to slowest bus line) time, thereby introducing a wider time-spread of resulting current power profiles, thereby impeding deep learning of the transistor switching/flipping state behavior, and consequently disrupting efficacy of profile/signature matching/mapping of transistor state changes characteristic of a traditional power analysis side channel attack-an advantage of the technical solution. For example, for a same data transition scenario, a first 1^{st} randomization could well produce the (electrical) current signature outcome of A→C→B (451,452,453) for digital output sequence 111. Yet, a second 2^{nd} randomization for the same scenario could produce B→A→C (451,452,453), or even a 3^{rd} randomization could produce C→B→A (451,452,453), each still producing the same digital output sequence 111. The Current signatures are now different when a same operation is executed several times. That is, multiple variations of the data signals are available to represent a "same" digital data sequence.

Here, in the inventive embodiment, the desynchronizing is at a finer grain level; namely, at the individual bit-level between clocking times of sequential circuits along data paths. This is different from, and an advantage over, usual state of the art jitter mechanisms where all bits are shifted at the same time, or where noise is intentionally introduced to confound side channel attack success. The random delays are added on the data path of combinatorial logic, between any sequential elements, such as registers, memories and so on. Although the random delay cell **420** is added on the link (e.g. data path) between sequential elements, the bus is not mandatory per se. Here, each random delay cell **420** is performed on a per bit basis and not a nibble/byte/word basis. This allows for overlap between bits, and accordingly produces a wider range of resulting signatures (power traces). Advantageously, it provides for temporal misalignment of current signals (see A→C→B (451,452,453) in **FIG 4A**) thereby introducing another form of noise into the signals and favorably destabilizing side channel attacks. The learning phase of a side channel attack using power analysis is much more difficult to conduct.

The random programmable delay line (401) is suitable for insertion amongst multiple data paths (307) connecting a first sequential circuit (301) to a combinational logic (320) to a second sequential circuit (302) to desynchronize transitions there between. The delay line (401) is programmable and introduces a randomness of data transfer at a bit-level along said data path by way of one or more random delay cells (420) therein, and with said sequential circuit (301) together produce power traces (451-453) with a randomly characteristic time delay (A,B,C). The one or more random delay cells (420) constructively produce overlaps (A,B,C) of said power traces (451-453) to maximally span bit-value profiles of said first and second sequential circuit. The randomness selectively and dynamically modifies bus lines of said multiple data paths (307) to spread a timing race of each bus line, thereby imparting said randomly characteristic time delay. The random selector (427) and random masking bit (402) by way of said series of delay cells (425) and said multiplexer (426) introduce said randomness into the data path (307) thereby desynchronizing transitions of said first and second sequential logic circuits. Each random delay cell (420) can be programmatically turned off or on for performance tuning at the macro-level. Similarly, each individual cell in said series of delay cells (425) can be programmatically turned off or on for performance tuning at the micro-level, wherein said performance tuning imparts said randomly characteristic time delay to said power traces (451-453). The performance tuning includes stacking delays in the series of delay cells (425) to maximize or minimize an amount of bit-level overlaps, wherein this stacking is mapped to the range of the random number generator. The performance tuning can be learned via training or hard-coded.

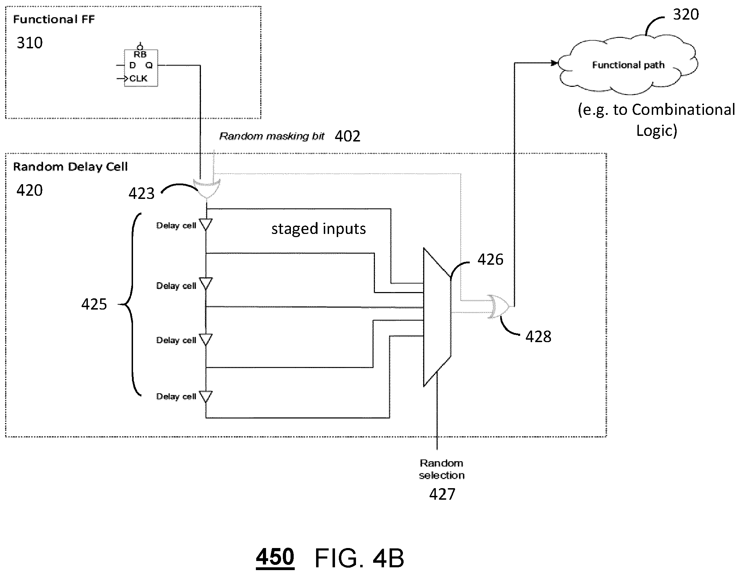

**FIG 4B** depicts an exemplary schematic **450** that includes the random delay cell **420** seen in circuit **400** of **FIG 4A** in accordance with an inventive embodiment. Briefly, the one or more random delay cells **420** constitute the random programmable delay line **401** seen in circuit **400** of **FIG 4A**. In this schematic **450**, the random delay cell **420** receives as input a random masking bit **402** and a random selector **427**. In this example schematic, the random masking bit **402** is or'd with the Q output (data path) of the functional flip-flop **310**. A D flip-flop is widely used as the basic building block of random access memory (RAM) and registers. The D flip-flop captures the D-input value at the specified edge (i.e., rising or falling) of the clock. After the rising/falling clock edge, the captured value is available at Q output. The Q output of the functional flip-flop **310** is then staged through a series of delay cells **425**, wherein one of these staged (delayed) Q outputs will be chosen depending on the random selector **427**. The output of the mux **426** receiving the delayed Q outputs is then or'd with the random masking bit **402**. The selected delayed Q output connects to the functional path of the combinational logic **320**. The schematic **450** is a representative subportion of the schematic **400** of **FIG 4A** with corresponding elements.

The random masking bit **402** and a random selector **427** can each, alone or in combination, be sourced by a random number generator. A random number generator is a hardware device or software algorithm that generates a number that is taken from a limited or unlimited distribution and outputs it. The two main types of random number generators are pseudo random number generators and true random number (TRNG) generators. A hardware random number generator (HRNG) is a true random number generator, and is a device that generates random numbers from a physical process, rather than by means of an algorithm. Such devices are often based on microscopic phenomena that generate low-level, statistically random "noise" signals, such as thermal noise, the photoelectric effect, involving a beam splitter, and other quantum phenomena. It is emphasized however, that the exemplary schematic **450** is not the only configuration for introducing randomness into the data path of sequential logic circuits contemplated above. It merely serves as one example on how to introduce delays for purposes of desynchronizing transitions across sequential circuit elements.

It should also be noted that the one or more random delay cells **420** constituting the random programmable delay line **401**, are programmable. That is, for example, each random delay cell **420** at the macro-level (and individual delay cells **425** at the micro-level) can be selectively turned off or on for performance tuning purposes. For the purposes of performance tuning, the number of delays in the delay line 425 can be stacked to maximize or curtail (minimize) the amount of bit-level overlaps mentioned above, and this stacking can be mapped to the range of the random number generator as an advantage of the technical effect of the solution. The performance tuning can be learned via training (see FIG. 1) or hard-coded. Recall, the bus line current profiles are modified dynamically (by way of the random selection) to make the learning phase of a side channel attack more complex by adding circuitry (e.g. random delay cells **420**) to each bus line in order to spread the timing race of each bus line. At a physical level, the additional delays and their compositions thereof also introduce noise along the low-level bus lines, also leading to EM variations. The continual randomization imparted by the random masking bit **402** and a random selector **427** to the delay cells in the delay line provides means for this dynamic modification of the bus lines. The programmable delay that depends on a random value can be sourced from a hardware number generator. Advantageously, the numerical range of the generator can be programmatically bound to the number of delay elements in the random programmable delay line **401**, and tuned in accordance with a learning phase, whereby the number of delays are learned, and chosen to guarantee that the bus lines (electromagnetic) current activity overlap when the bus is computing the same data vector v many times. Stated differently, the minimum and maximum values of the programmable delays are chosen (or learned) to maximize the spread of the timing race amongst current signatures/profiles of a same data input/output mapping.

The random delay cell (420) desynchronizes transitions within an electronic device and aid in mitigating supervised power analysis profiling of a side channel attack. The cell (420) comprises a series of delay cells (425), and a multiplexer (426). Each random delay cell (420) receives as input: a random masking bit (402) to said series of delay cells (425); and
a random selector (427) to said multiplexer (426). The random selector (427) and said random masking bit (402) by way of said series of delay cells (425) and said multiplexer (426) introduce a randomness into the data path (307). One embodiment realized is a configuration wherein said random masking bit (402) is or'd with an output of a first sequential circuit (301). The output of the first sequential circuit (301) is then staged through said series of delay cells (425) as staged inputs into said multiplexer (426). One of said staged inputs is chosen according to said random selector (427), and an output of the mux (426) receiving a chosen staged input is then or'd with the random masking bit (402). The chosen staged input then connects to said combinational logic (329). The random masking bit (402) and random selector (427), alone or in combination, is sourced by a hardware random number generator (HRNG), though other sources can be used.

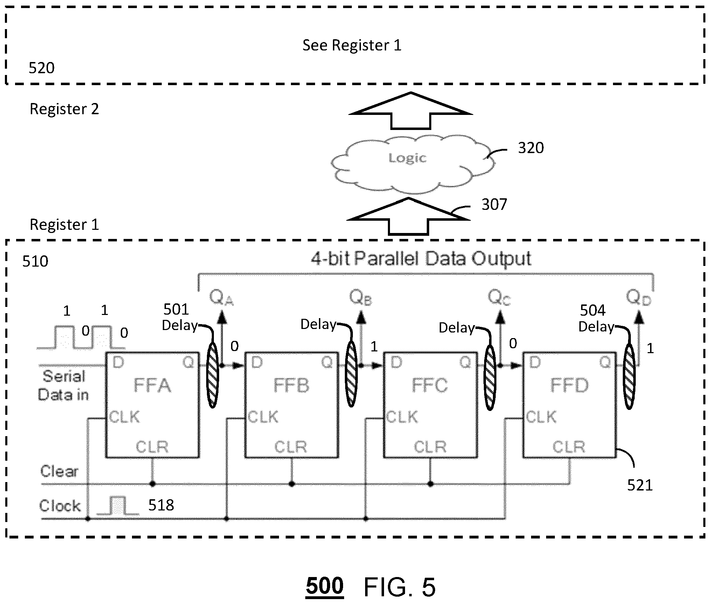

**FIG 5** depicts a schematic **500** for a parallel shift register that incorporates a delay element in accordance with an inventive embodiment. The delay element (501-504) can be realized via the schematic 450, which incorporates the random delay cell **420** seen in **FIG 4B****,** although other electronic circuit designs and configurations are contemplated. The shift register **500** is a sequential device that loads the data present on its inputs and then moves or "shifts" it to its output once every clock cycle. The shift register basically consists of several single bit "D-Type Data Latches", one for each data bit, either a logic "0" or a "1", connected together in a serial type daisy-chain arrangement so that the output from one data latch becomes the input of the next latch. In the parallel shift register, data bits are fed in or out of the shift register all together at the same time in a parallel configuration.

The point of **FIG 5** is to visually show how a parallel shift register can be redesigned/configured for securing and desynchronizing flip-flop transfers as a mitigation strategy to side channel attacks that employ power analysis profiling, whereby leakage information produced as a result of flip-flop switching at a lower level, by way of random delay cell insertions, is decorrelated from actual power consumption. Although in previous embodiments shown, the delay 501 was inserted before asynchronous combinatorial logic, there the delay is inserted between synchronous flip-flops.

The temporally-skewed register (510) desynchronizes transitions within an electronic device and aid in mitigating supervised power analysis profiling of a side channel attack. The register (501) comprises a clock (518); one or more flip-flops (521) serially coupled to produce parallel data that is shifted into combinational logic (320) by way of said clock (518),
and a random delay cell (420) inserted at an output of each said flip-flop to desynchronize transitions between said flip-flop and said combinational logic. The random delay cell (420) comprises a series of delay cells (425), and a multiplexer (426). The random delay cell receives as input: a random masking bit (402) to said series of delay cells (425); and a random selector (427) to said multiplexer (426). The random selector (427) and said random masking bit (402) by way of said series of delay cells (425) and said multiplexer (426) introduce a randomness into the data path (307) to produces overlaps (A,B,C) of resulting power traces (451-453) to maximally span across bit value profiles of said flip-flop. The random masking bit (402) and random selector (427), alone or in combination, is sourced by a hardware random number generator (HRNG), though other sources can be used.

### Other embodiments:

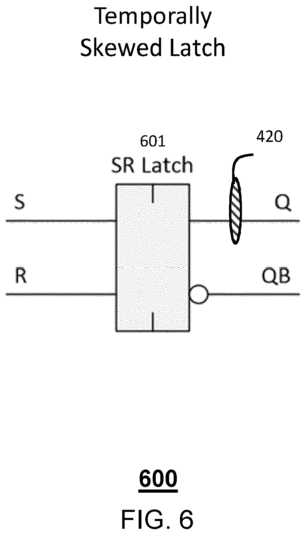

Various embodiments for securing and desynchronizing register transfers as a mitigation strategy to side channel attacks that employ power analysis profiling, whereby leakage information produced as a result of register switching at the bit-level, by way of random delay cell insertions, is decorrelated from actual power consumption have been provided. delay element represents a latch. The examples so far have includes
sequential/synchronous circuits. However other embodiments are contemplated for extending the inventive aspect to latches. A latch is a circuit that can hold 1 bit of data and is asynchronous (i.e. without a clock). In contrast, a register (as seen in **FIG. 5**) is a combination of flipflops (which are the same as latch but have a clock pulse to trigger). Referring to **FIG. 6**, a temporally skewed latch **600** is shown in accordance with anther embodiment. The latch **600** is configured with the random delay cell **420**. The latch can be applied on source elements site, and on destination elements site. Several latches can be combined in parallel to form a register. There will be inputs for each bit plus a clock. An 8-bit register used inside a microcontroller would hold a single byte. Accordingly, the principles of operation explained in **FIG 4A-4B** applied to the register configuration shown in **FIG. 5**, apply similarly to the temporally skewed latch **600**. In this case however, there is the option of no-clocking, rather the arrangement of latches can operate asynchronously if so designed.

The temporally-skewed latch (501) desynchronizes transitions within an electronic device and aids in mitigating supervised power analysis profiling of a side channel attack. The latch (501) comprises a latch (601); and thereto communicatively coupled,
a random delay cell (420) inserted along a data path (307) from said latch to a combinational logic (320) to desynchronize transitions between said latch and said combinational logic. The random delay cell (420) comprises a series of delay cells (425), and a multiplexer (426). The random delay cell receives as input: a random masking bit (402) to said series of delay cells (425); and a random selector (427) to said multiplexer (426). The random selector (427) and said random masking bit (402) by way of said series of delay cells (425) and said multiplexer (426) introduce a randomness into the data path (307) to produces overlaps (A,B,C) of resulting power traces (451-453) to maximally span across bit value profiles of said latch. The random masking bit (402) and random selector (427), alone or in combination, is sourced by a hardware random number generator (HRNG), though other sources can be used.

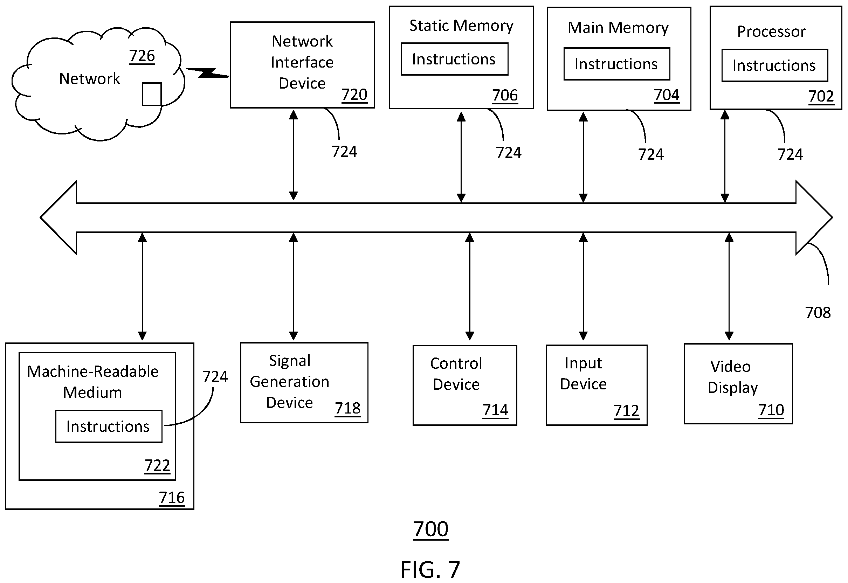

These embodiments can be implemented on a computer, hardware, or other device such as a machine. **FIG. 7** depicts an exemplary diagrammatic representation of a machine **700** in he form of a computer system **700** within which a set of instructions, when executed, may cause the machine to perform any one or more of the methodologies discussed above. In some embodiments, the machine operates as a standalone device, such as a computer, laptop, mobile device, remote control, or display. In some embodiments, the machine may be connected (e.g., using a network) to other machines. In a networked deployment, the machine may operate in the capacity of a server or a client user machine in server-client user network environment, or as a peer machine in a peer-to-peer (or distributed) network environment.

The machine may comprise a server computer, a client user computer, a personal computer (PC), a tablet PC, a laptop computer, a desktop computer, a mobile device, a cell phone, a control system, a network router, switch or bridge, or any machine capable of executing a set of instructions (sequential or otherwise) that specify actions to be taken by that machine. It will be understood that a device of the present disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methodologies discussed herein.

The computer system **700** may include a processor **702** (e.g., a central processing unit (CPU), a graphics processing unit (GPU, or both), a main memory **704** and a static memory **706**, which communicate with each other via a bus **708**. The computer system **700** may further include a video display unit **710** (e.g., a liquid crystal display or LCD), a flat panel, a solid state display, or a cathode ray tube (CRT)). The computer system 700 may include an input device **712** (e.g., a keyboard, screen), a cursor control device **714** (e.g., a mouse, screen), a disk drive unit **716**, a signal generation device **718** (e.g., a speaker or remote control) and a network interface device **720**.

The disk drive unit **716** may include a machine-readable medium **722** on which is stored one or more sets of instructions (e.g., software **724**) embodying any one or more of the methodologies or functions described herein, including those methods illustrated above. The instructions **724** may also reside, completely or at least partially, within the main memory **704**, the static memory **706**, and/or within the processor **702** during execution thereof by the computer system **700**. The main memory **704** and the processor **702** also may constitute machine-readable media.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the machine-readable medium **722** is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure.

The term "machine-readable medium" shall accordingly be taken to include, but not be limited to: solid-state memories such as a memory card or other package that houses one or more read-only (non-volatile) memories, random access memories, or other re-writable (volatile) memories; magneto-optical or optical medium such as a disk or tape; and carrier wave signals such as a signal embodying computer instructions in a transmission medium; and/or a digital file attachment to e-mail or other self-contained information archive or set of archives is considered a distribution medium equivalent to a tangible storage medium. Accordingly, the disclosure is considered to include any one or more of a machine-readable medium or a distribution medium, as listed herein and including art-recognized equivalents and successor media, in which the software implementations herein are stored.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

### Further Definitions:

In the above-description of various embodiments of the present disclosure, aspects of the present disclosure may be illustrated and described herein in any of a number of patentable classes or contexts including any new and useful process, machine, manufacture, or composition of matter, or any new and useful improvement thereof. Accordingly, aspects of the present disclosure may be implemented in entirely hardware, entirely software (including firmware, resident software, micro-code, etc.) or combining software and hardware implementation that may all generally be referred to herein as a "circuit," "module," "component," or "system." Furthermore, aspects of the present disclosure may take the form of a computer program product comprising one or more computer readable media having computer readable program code embodied thereon.

Any combination of one or more computer readable media may be used. The computer readable media may be a computer readable signal medium or a computer readable storage medium. A computer readable storage medium may be, for example, but not limited to, an electronic, magnetic, optical, electromagnetic, or semiconductor system, apparatus, or device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable signal medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Scala, Smalltalk, Scheme, Go, C++, C#, VB.NET, Python or the like, conventional procedural programming languages, such as the "C" programming language, Perl, PHP, dynamic programming languages such as Python, Ruby and Groovy, or other programming languages. The program code may execute entirely on the user's computer, partly on the user's computer, as a stand-alone software package, partly on the user's computer and partly on a remote computer, entirely on the remote computer or server, or within the Cloud or other computer network. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS), Backend as a Service (BaaS) for connecting mobile apps to cloud based services, and Security as a Service (SECaas).

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

These computer program instructions may also be stored in a computer readable medium that when executed can direct a computer, other programmable data processing apparatus, or other devices to function in a particular manner, such that the instructions when stored in the computer readable medium produce an article of manufacture including instructions which when executed, cause a computer to implement the function/act specified in the flowchart and/or block diagram block or blocks. The computer program instructions may also be loaded onto a computer, other programmable instruction execution apparatus, or other devices to cause a series of operational steps to be performed on the computer, other programmable apparatuses or other devices to produce a computer implemented process such that the instructions which execute on the computer or other programmable apparatus provide processes for implementing the functions/acts specified in the flowchart and/or block diagram block or blocks.

It is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

The flowchart and block diagrams in the figures illustrate the architecture, functionality, and operation of possible implementations of systems, methods, and computer program products according to various aspects of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Like reference numbers signify like elements throughout the description of the figures.

The corresponding structures, materials, acts, and equivalents of any means or step plus function elements in the claims below are intended to include any disclosed structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The aspects of the disclosure herein were chosen and described in order to best explain the principles of the disclosure and the practical application, and to enable others of ordinary skill in the art to understand the disclosure with various modifications as are suited to the particular use contemplated.

## Claims

1. An electronic device (420) to mitigate power analysis profiling of a side channel attack comprising:
a first sequential circuit (301);
a second sequential circuit (302);
a combinational logic (320) between said first and second sequential circuits; and
a clock (360);
wherein said sequential circuits are clocked along a data path (307) and whereby said electronic device produces power traces (303-304) with a time delay (340-350) specific to said electronic device (420),
**characterized in that**:
a random programmable delay line (401) inserted along said data path (307) from said first sequential circuit (301) to said combinational logic (320) desynchronizes transitions within said first and second sequential circuit,
whereby said delay line (401),
constructively produces overlaps (A,B,C) of said power traces (451-453) to maximally span bit value profiles of said first and second sequential circuit.

2. The electronic device of claim 1, wherein said delay line (401) produces a more numerous and wider time-spread of resulting power trace profiles than without said delay line, thereby impeding deep learning (107) of transistor switching and flipping state behavior when said power traces are analyzed using a Hamming (250,260) Weight or Distance model.

3. The electronic device of claim 1, wherein randomizations provided by the random programmable delay line (401) selectively and dynamically modify bus lines of said data path (307), thereby spreading a timing race of each bus line.

4. The electronic device of claim 1, wherein the programmable random delay line (401) comprises:
one or more random delay cells (420) each comprising
a series of delay cells (425), and
a multiplexer (426);
wherein each random delay cell receives as input:
a random masking bit (402) to said series of delay cells (425); and
a random selector (427) to said multiplexer (426);
wherein said random selector (427) and said random masking bit (402) by way of said series of delay cells (425) and said multiplexer (426) introduce randomness into the data path (307) thereby desynchronizing transitions of said first and second sequential logic circuits.

5. The electronic device of claim 4, wherein
said random masking bit (402) is or'd with an output of the first sequential circuit (301);
said output of the first sequential circuit (301) is then staged through said series of delay cells (425) as staged inputs into said multiplexer (426);
wherein one of said staged inputs is chosen according to said random selector (427), and
an output of the mux (426) receiving a chosen staged input is then or'd with the random masking bit (402); and
the chosen staged input then connects to said combinational logic (329).

6. The electronic device of claim 5, wherein said random masking bit (402) and random selector (427), alone or in combination, is sourced by a hardware random number generator (HRNG).

7. The electronic device of claim 6, wherein
each random delay cell (420) is selectively turned off or on for performance tuning at the macro-level; and
each individual cell in said series of delay cells (425) is selectively turned off or on for performance tuning at the micro-level.

8. The electronic device of claim 7, wherein said performance tuning includes
stacking delays in the series of delay cells (425) to maximize or minimize an amount of bit-level overlaps,
wherein this stacking is mapped to the range of the random number generator, wherein the performance tuning is learned via training or hard-coded.

9. A random programmable delay line (401) suitable for insertion amongst multiple data paths (307) connecting a first sequential circuit (301) to a combinational logic (320) to a second sequential circuit (302) to desynchronize transitions there between,
**characterized in that**:
said delay line (401) is programmable and introduces a randomness of data transfer at a bit-level along said data path by way of one or more random delay cells (420) therein, and with said sequential circuit (301) together produce power traces (451-453) with a randomly characteristic time delay (A,B,C),
wherein said one or more random delay cells (420) constructively produce overlaps (A,B,C) of said power traces (451-453) to maximally span bit-value profiles of said first and second sequential circuit,
wherein said randomness selectively and dynamically modifies bus lines of said multiple data paths (307) to spread a timing race of each bus line, thereby imparting said randomly characteristic time delay.

10. The random programmable delay line (401) of claim 9, wherein said one or more random delay cells (420) each comprise:
a series of delay cells (425), and
a multiplexer (426);
wherein each random delay cell (420) receives as input:
a random masking bit (402) to said series of delay cells (425); and
a random selector (427) to said multiplexer (426);
wherein said random selector (427) and said random masking bit (402) by way of said series of delay cells (425) and said multiplexer (426) introduce said randomness into the data path (307) thereby desynchronizing transitions of said first and second sequential logic circuits.

11. The random programmable delay line (401) of claim 10, wherein
each random delay cell (420) is programmatically turned off or on for performance tuning at the macro-level; and
each individual cell in said series of delay cells (425) is programmatically turned off or on for performance tuning at the micro-level,
wherein said performance tuning imparts said randomly characteristic time delay to said power traces (451-453).

12. A random delay cell (420) to desynchronize transitions within an electronic device and aid in mitigating supervised power analysis profiling of a side channel attack, the cell (420) comprising:
a series of delay cells (425), and
a multiplexer (426);
wherein each random delay cell (420) receives as input:
a random masking bit (402) to said series of delay cells (425); and
a random selector (427) to said multiplexer (426);
wherein said random selector (427) and said random masking bit (402) by way of said series of delay cells (425) and said multiplexer (426) introduce a randomness into the data path (307), wherein,
said random masking bit (402) is or'd with an output of a first sequential circuit (301);
said output of the first sequential circuit (301) is then staged through said series of delay cells (425) as staged inputs into said multiplexer (426);
wherein one of said staged inputs is chosen according to said random selector (427), and
an output of the mux (426) receiving a chosen staged input is then or'd with the random masking bit (402); and
the chosen staged input then connects to said combinational logic (329),
wherien said random masking bit (402) and random selector (427), alone or in combination, is sourced by a hardware random number generator (HRNG).

13. A temporally-skewed register (510) to desynchronize transitions within an electronic device and aid in mitigating supervised power analysis profiling of a side channel attack, the register (501) comprising:
a clock (518);
one or more flip-flops (521) serially coupled to produce parallel data that is shifted into combinational logic (320) by way of said clock (518); and
a random delay cell (420) inserted at an output of each said flip-flop to desynchronize transitions between said flip-flop and said combinational logic,
wherein said random delay cell (420) comprises
a series of delay cells (425), and
a multiplexer (426);
wherein said random delay cell receives as input:
a random masking bit (402) to said series of delay cells (425); and
a random selector (427) to said multiplexer (426);
wherein said random selector (427) and said random masking bit (402) by way of said series of delay cells (425) and said multiplexer (426) introduce a randomness into the data path (307) to produces overlaps (A,B,C) of resulting power traces (451-453) to maximally span across bit value profiles of said flip-flop,
wherien said random masking bit (402) and random selector (427), alone or in combination, is sourced by a hardware random number generator (HRNG).

14. A temporally-skewed latch (501) to desynchronize transitions within an electronic device and aid in mitigating supervised power analysis profiling of a side channel attack, the latch (501) comprising:
a latch (601); and thereto communicatively coupled,
a random delay cell (420) inserted along a data path (307) from said latch to a combinational logic (320) to desynchronize transitions between said latch and said combinational logic,
wherein said random delay cell (420) comprises
a series of delay cells (425), and
a multiplexer (426);
wherein said random delay cell receives as input:
a random masking bit (402) to said series of delay cells (425); and
a random selector (427) to said multiplexer (426);
wherein said random selector (427) and said random masking bit (402) by way of said series of delay cells (425) and said multiplexer (426) introduce a randomness into the data path (307) to produces overlaps (A,B,C) of resulting power traces (451-453) to maximally span across bit value profiles of said latch,
wherien said random masking bit (402) and random selector (427), alone or in combination, is sourced by a hardware random number generator (HRNG).
